# EUROPEAN PATENT SPECIFICATION

(11) **EP 4 485 677 B1**
(45) Date of publication and mention of the grant of the patent: **18.03.2026**
(21) Application number: 24180006.9
(22) Date of filing: 04.06.2024
(51) Int. Cl.: H01M 50/55, H01M 50/474, H01M 50/107

(54) **SECONDARY BATTERY**
SEKUNDÄRBATTERIE
BATTERIE SECONDAIRE

(30) Priority: 27.06.2023 KR 20230082636; 01.12.2023 KR 20230172088
(43) Date of publication of application: 01.01.2025
(73) Proprietor: Samsung SDI Co., Ltd., Yongin-si, Gyeonggi-do 17084 (KR)
(72) Inventor: YU, Gwan Hyeon, 17084 Yongin-si (KR); JUNG, Hyun Ki, 17084 Yongin-si (KR); KIM, Myung Seob, 17084 Yongin-si (KR); KIM, Mun Sung, 17084 Yongin-si (KR); LEE, Dong Sub, 17084 Yongin-si (KR); YOO, Yoon Sun, 17084 Yongin-si (KR); JUN, Woo Tae, 17084 Yongin-si (KR)
(74) Representative: Marks & Clerk LLP

(56) References cited:
- WO-A1-2023/055088
- WO-A1-2023/068889
- CN-U- 218 887 468

## Description

### BACKGROUND

### 1. Field

The present disclosure relates to a secondary battery.

### 2. Description of the Related Art

Unlike a primary battery that cannot be recharged, a secondary battery is a battery that can be charged and discharged. A low-capacity battery, in which one battery cell is packaged in the form of a pack has been mainly used in small portable electronic devices, such as smartphones and digital cameras. A large-capacity battery, in the form of a module in which dozens or hundreds of battery packs are connected, has been used as a power source for driving motors in hybrid vehicles, electric vehicles, or drones, or as an energy storage device.

A rechargeable secondary battery may include an electrode assembly having a separator interposed between a positive electrode plate and a negative electrode plate, a current collector plate electrically connected to the electrode assembly, a terminal electrically connected to the current collector plate, and a case which accommodates the electrode assembly and the current collector plate and to which the terminal is coupled therethrough.

The above-described information disclosed in the technology that serves as the background of the present disclosure is only for improving understanding of the background of the present disclosure and thus may include information that does not constitute the related art.

CN 218887468 U describes a battery monomer, a battery and a power utilization device. The battery monomer comprises a shell which is provided with a first electrode leading-out part and a second electrode leading-out part which are opposite in polarity, and at least one of the first electrode leading-out part and the second electrode leading-out part comprises an electrode terminal. The electrode assembly is arranged in the shell and comprises an electrode main body as well as a first tab and a second tab which are led out from the same side of the electrode main body. The current collecting assembly is arranged on the side, close to the first electrode lug and the second electrode lug, of the electrode body. The current collecting assembly comprises a first current collecting piece and a second current collecting piece. The first current collecting piece electrically connects the first electrode lug with the first electrode leading-out part, and the second current collecting piece electrically connects the second electrode lug with the second electrode leading-out part.

WO 2023/068889 A1 describes a cylindrical battery comprising an electrode assembly in which a first electrode, a second electrode, and a separator interposed therebetween are wound. The first electrode and the second electrode include a first non-coated portion and a second non-coated portion. At least one of the first non-coated portion and the second non-coated portion is itself defined as an electrode tab, and includes a core side non-coated portion, an outer circumferential side non-coated portion, and an intermediate non-coated portion interposed therebetween. At least one of the core side non-coated portion and the outer circumferential side non-coated portion has a height smaller than that of the intermediate non-coated portion in the winding axis direction. The cylindrical battery comprises: a battery housing which receives the electrode assembly through an opening and is electrically connected to the second non-coated portion; an external terminal which is electrically connected to the first non-coated portion and extends through a closed portion of the battery housing to be exposed to the outside; and a cap plate for covering the opening of the battery housing.

WO 2023/055088 A1 describes an electrode assembly, a cylindrical battery cell, a battery pack and a vehicle including the same. An electrode assembly corresponds to a jelly-roll type electrode assembly having a structure in which a first electrode current collector and a second electrode current collector having a sheet shape and a separator interposed therebetween are wound in one direction. The first electrode current collector includes a first uncoated portion at a long side end portion on which an active material layer is not coated, and the first uncoated portion is exposed to the outside of the separator while forming a plurality of winding turns on the basis of the center of the electrode assembly to be used itself as an electrode tab, and includes an insulation member for covering an exposed curved surface of the first uncoated portion positioned at an outermost winding turn exposed through an outer circumferential surface of the electrode assembly among the plurality of winding turns.

### SUMMARY

The present disclosure provides a secondary battery having a low electrical resistance and a short current path by providing a first tab (e.g., a positive electrode tab) and a second tab (e.g., a negative electrode tab) of an electrode assembly in the same direction to be electrically connected to a first terminal (e.g., a rivet terminal) and a second terminal (e.g., a case).

The present disclosure also provides a secondary battery allowing a relatively large electrode assembly to be accommodated inside a case by having a first current collector plate (e.g., a positive electrode current collector plate) and a second current collector plate (e.g., a negative electrode current collector plate) that are three-dimensionally coupled and provided in the same region to occupy a relatively small volume in an inner space of the case.

The present disclosure also provides a secondary battery having excellent flatness between a first terminal (e.g., a rivet terminal) and a second terminal (e.g., a case) by providing a conductive ring plate on the second terminal.

A secondary battery according to one or more embodiments of the present disclosure includes: a case having a cylindrical shape; an electrode assembly in (e.g. accommodated in) the case, and including a plurality of first tabs protruding in a first direction and a plurality of second tabs protruding in the first direction, a first current collector plate in (e.g. accommodated in) the case and connected to the plurality of first tabs, a second current collector plate configured to connect the plurality of second tabs to the case; a rivet terminal connected to the first current collector plate and passing through the case; and an insulating member in contact with a perimeter of each of the electrode assembly, the first current collector plate, and the second current collector plate.

In one or more embodiments, each of the plurality of first tabs may have a planar circular sector shape with a center, an outer arc, and an inner arc or a rectangular planar shape.

In one or more embodiments, an interior angle of each of the first tabs may be less than 180°.

In one or more embodiments, the plurality of second tabs may be spaced apart from and facing the plurality of first tabs, and may have a planar circular sector shape with a center, an outer arc, and an inner arc or a rectangular planar shape.

In one or more embodiments, an interior angle of each of the second tabs may be less than 180°.

In one or more embodiments, the first current collector plate may include a first current collector plate first connection region connected to the first tabs, a first current collector plate connecting region bent from, and extending in the first direction from, the first current collector plate first connection region, and a first current collector plate second connection region bent from, and extending from, the first current collector plate connecting region and configured to be connected to the rivet terminal.

In one or more embodiments, the first current collector plate first connection region may have a planar circular sector shape with a center, an outer arc, and an inner arc, and the first current collector plate second connection region may have a disc shape with a center.

In one or more embodiments, the second current collector plate may include a second current collector plate first connection region connected to the plurality of second tabs, a second current collector plate connecting region bent from, and extending in the first direction from, the second current collector plate first connection region, and a second current collector plate second connection region bent from, and extending from, the second current collector plate connecting region and configured to be connected to the case.

In one or more embodiments, the second current collector plate first connection region may have a planar circular sector shape with a center, an outer arc, and an inner arc, and the second current collector plate second connection region may have a circular ring plate shape with a center.

In one or more embodiments, a portion of the insulating member may support the second current collector plate second connection region.

In one or more embodiments, the secondary battery may further include one or more insulating plates between (e.g. interposed between) the first current collector plate and the second current collector plate, and the one or more insulating plates may have a planar circular sector shape with a center, an outer arc, and an inner arc.

In one or more embodiments, the secondary battery may further include a conductive ring plate attached to a portion of the case extending around a periphery of the rivet terminal.

In one or more embodiments, the first current collector plate may include a first current collector plate first connection region connected to the plurality of first tabs, a first current collector plate connecting region bent from, and extending in the first direction from, the first current collector plate first connection region, and a first current collector plate second connection region bent from, and extending from, the first current collector plate connecting region to be connected to the rivet terminal, and the second current collector plate may include a second current collector plate first connection region connected to the plurality of second tabs, a second current collector plate connecting region bent from, and extending in, the first direction from the second current collector plate first connection region, and a second current collector plate second connection region bent from, and extending from, the second current collector plate connecting region and configured to be connected to the case.

In one or more embodiments, the first current collector plate first connection region and the second current collector plate first connection region may be located on the same plane, and the first current collector plate second connection region may be located closer to the electrode assembly than the second current collector plate second connection region is.

In one or more embodiments, the case may include a rivet plate to which the rivet terminal is coupled, (e.g. coupled therethrough), a sidewall welded to the rivet plate and extending in a second direction opposite to the first direction, and a finishing plate integrally extending from the sidewall. In one or more embodiments, the finishing plate may include a safety vent.

In one or more embodiments, the case may include a rivet plate to which the rivet terminal is coupled (e.g. coupled therethrough), a sidewall integrally extending in a second direction opposite to the first direction from the rivet plate, and a finishing plate configured to close an end of the sidewall. In one or more embodiments, the finishing plate may include a safety vent.

In one or more embodiments, the finishing plate may be fixed to the sidewall by a beading portion and a crimping portion on (e.g. provided on) the sidewall.

In one or more embodiments, the finishing plate may be fixed to the sidewall by a weld.

At least some of the above and other features of the invention are set out in the claims.

### BRIEF DESCRIPTION OF THE DRAWINGS

FIGS. 1A and 1B are a perspective view and a cross-sectional view, illustrating a secondary battery according to an embodiment of the present disclosure.
FIGS. 2A and 2B are a plan view and a perspective view illustrating an electrode assembly of the secondary battery according to an embodiment of the present disclosure.
FIGS. 3A to 3D are plan views illustrating an unfolded state of the electrode assembly of the secondary battery according to an embodiment of the present disclosure.
FIGS. 4A to 4C are a cross-sectional view, a plan view, and a perspective view illustrating a current collector plate assembly and an insulating member of the secondary battery according to an embodiment of the present disclosure.
FIG. 4D is a perspective view illustrating a state in which the current collector plate assembly and the insulating member according to an embodiment of the present disclosure are coupled to the electrode assembly.
FIG. 5 is a schematic view illustrating a laser welding method in a method of manufacturing the secondary battery according to an embodiment of the present disclosure.
FIG. 6 is a cross-sectional view illustrating a secondary battery according to an embodiment of the present disclosure.
FIG. 7 is a cross-sectional view illustrating a secondary battery according to another embodiment of the present disclosure.
FIG. 8 is a cross-sectional view illustrating a secondary battery according to a further embodiment of the present disclosure.

### DETAILED DESCRIPTION

Hereinafter, embodiments of the present disclosure will be described in detail with reference to the accompanying drawings.

The present disclosures are provided to more fully describe the present disclosure to those skilled in the art, and following embodiments may be modified in many different forms, and the scope of the present disclosure is not limited to the following embodiments. Rather, these embodiments are provided so that the present disclosure will be thorough and complete, and will fully convey the present disclosure to those skilled in the art.

In addition, in the drawings below, the thickness or size of each layer is exaggerated for convenience and clarity of illustration, and like reference numerals refer to like elements in the drawings. As used in the present specification, the term "and/or" may include any and all combinations of one or more of the associated listed items. In addition, in the present specification, it is to be understood that when a member A is referred to as being "connected to" a member B, the member A may be directly connected to the member B, or a member C may be interposed between the members A and B such that the member A is indirectly connected to the member B.

The terms used herein are for the purpose of describing specific embodiments and are not intended to limit the present disclosure. As used in the present specification, a singular form may, unless definitely indicating a particular case in terms of the context, include a plural form. In addition, the terms "comprise" or "include" and/or "comprising" or "including," when used in the present specification, specify the presence of stated features, numbers, steps, operations, members, elements, and/or groups thereof, but do not preclude the presence or addition of one or more other features, numbers, steps, operations, members, elements, and/or groups thereof.

In the present specification, although the terms "first," "second," and the like may be used to describe various members, components, regions, layers, and/or portions, these members, components, regions, layers, and/or portions are not to be limited by these terms. These terms are used to distinguish one member, component, region, layer, or portion from another member, component, region, layer, or portion. Thus, a first member, component, region, layer, or portion described below may also refer to a second member, component, region, layer, or portion without departing from the teachings of the present disclosure.

Spatially relative terms, such as "bottom," "beneath," "below," "lower," "above," "upper," may be used herein for easy understanding of one element or feature and another element(s) or feature(s) as illustrated in the drawings. These spatially relative terms are intended for ease of comprehension of the present disclosure according to various process states or usage states of the present disclosure, and are not intended to limit the present disclosure. For example, when an element or feature in the drawings is turned over, the element or feature described as "bottom," "beneath," or "below" may be changed into "above" or "upper." Thus, the term "bottom" or "beneath" may encompass the term "above" or "upper."

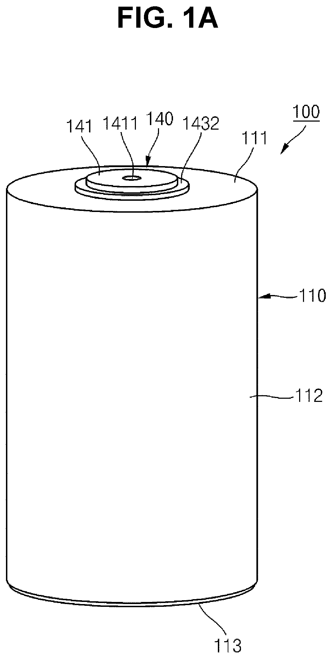

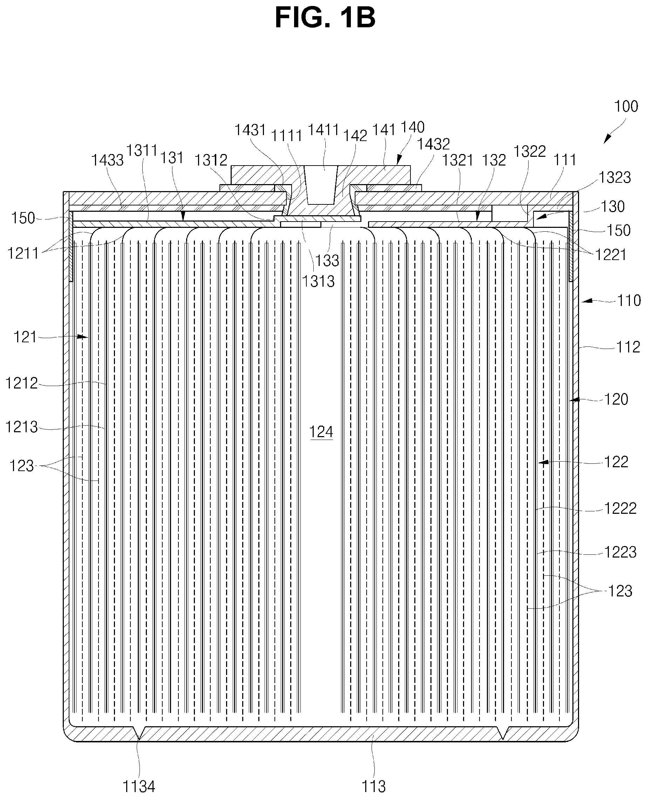

FIGS. 1A and 1B are a perspective view and a cross-sectional view, respectively, illustrating a secondary battery 100 according to one or more embodiments of the present disclosure. As shown in FIGS. 1A and 1B, the secondary battery 100 according to one or more embodiments of the present disclosure may include a case 110, an electrode assembly 120, a current collector plate assembly 130, a terminal 140, and an insulating member 150.

The case 110 may be provided in an approximately cylindrical shape. The case 110 may include an approximately disc-shaped rivet plate 111 having a terminal hole 1111 at the center thereof, a sidewall 112 extending in a downward direction from the rivet plate 111, and a finishing plate 113 configured to close a lower end portion of the sidewall 112. The case 110 may include or be referred to as a can, a housing, or an exterior material. The case 110 may include steel, a steel alloy, nickel-plated steel, aluminum, an aluminum alloy, copper, or a copper alloy. The case 110 may be manufactured by a deep drawing process in which a metal flat plate is placed over a die having an opening and pressed by a punch to manufacture a cylindrical case, by an extrusion process in which molten metal is placed in an extrusion die and extruded into a pipe-shaped case, or by a bending and welding process in which a thin metal flat plate is rolled into a cylindrical shape and bent and welded to manufacture a case. The case 110 is configured to accommodate the electrode assembly 120, the current collector plate assembly 130, and an electrolyte (optional), and isolate them from an external environment.

In one or more embodiments, the sidewall 112 and the finishing plate 113 may be integral. In one or more embodiments, the rivet plate 111 and the sidewall 112 may be separately provided and then coupled to each other by laser welding. In one or more embodiments, the rivet plate 111 and the sidewall 112 may be coupled to each other by beading/crimping, curling, or seaming. In one or more embodiments, the rivet plate 111 and the sidewall 112 may be integral. In one or more embodiments, the sidewall 112 and the finishing plate 113 may be separately provided and then welded and coupled to each other. In one or more embodiments, the sidewall 112 and the finishing plate 113 may be coupled to each other by beading/crimping, curling, or seaming.

In one or more embodiments, the finishing plate 113 may include a vent notch 1134 provided in an upper surface thereof such that the finishing plate 113 is relatively thin at the vent notch 1134. The vent notch 1134 may include a safety vent or may be referred to as a safety vent. The vent notch 1134 is configured to break to release an internal gas when an internal pressure of the secondary battery is higher than a reference pressure.

The electrode assembly 120 may be provided in a substantially cylindrical shape. The electrode assembly 120 may be wound in a cylindrical shape and then coupled to the case 110. The electrode assembly 120 may include or be referred to as an electrode group or a jelly roll. The electrode assembly 120 may include a first electrode plate 121 (e.g., a positive electrode plate), a second electrode plate 122 (e.g., a negative electrode plate), and a separator 123 between the first electrode plate 121 and the second electrode plate 122. In one or more embodiments, the first electrode plate 121 (e.g., the positive electrode plate), the separator 123, and the second electrode plate 122 (e.g., the negative electrode plate) may be wound into an approximately cylindrical shape while being stacked. The first electrode plate 121 may include a plurality of first tabs 1211 extending in an upward direction. The second electrode plate 122 may include a plurality of second tabs 1221 extending in the upward direction. In one or more embodiments, the upward direction may be defined as a first direction, and the downward direction opposite to the upward direction may be defined as a second direction.

In one or more embodiments, the first electrode plate 121 may be provided by applying a first active material 1213 such as a transition metal oxide onto a first current collector 1212 formed of a metal foil such as aluminum, and may include the first tab 1211 (for example, a region not coated with the first active material 1213) extending and protruding in the upward direction of the first current collector 1212. The extending and protruding first tabs 1211 may be referred to as first non-coated tabs or first base material tabs, and the first tabs 1211 may be aligned at the same or similar location through a winding process of the electrode assembly 120, a base material punching process, or a base material notching process to form a multitap. In one or more embodiments, the first tab 1211 may include a lead tab that is separately provided and welded to the first current collector 1212.

In one or more embodiments, a compound capable of reversible intercalation and deintercalation of lithium (a lithiated intercalation compound) may be used as the first active material. In one or more embodiments, at least one of a composite oxide of lithium and a metal selected from cobalt, manganese, nickel, iron, and a combination thereof may be used.

The composite oxide may be a lithium transition metal composite oxide, and embodiments thereof may include a lithium nickel-based oxide, a lithium cobalt-based oxide, a lithium manganese-based oxide, a lithium iron phosphate-based compound, a cobalt-free nickel-manganese-based oxide, or a combination thereof.

In an embodiment, a compound represented by any one of the following chemical formulas may be used: LiₐA_{1-b}X_{b}O_{2-c}D_{c} (where 0.90≤a≤1.8, 0≤b≤0.5, and 0≤c≤0.05); LiₐMn_{2-b}X_{b}O_{4-c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, and 0≤c≤0.5, 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂G_{b}O₄ (where 0.90≤a≤1.8 and 0.001≤b≤0.1); LiₐMn_{1-g}G_{g}PO₄ (where 0.90≤a≤1.8 and 0≤g≤0.5); Li(_{3-f)}Fe₂(PO₄)₃ (0≤f≤2); and LiₐFePO₄ (where 0.90≤a≤1.8).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In one or more embodiments, a positive electrode for a lithium secondary battery may include a current collector (e.g., a first current collector) and a positive electrode active material layer (e.g., a first active material layer) formed on the current collector. The positive electrode active material layer includes a positive electrode active material and may further include a binder and/or a conductive material.

The content of the positive electrode active material may be from 90 wt% to 99.5 wt% based on 100 wt% of the positive electrode active material layer, and the content of each of the binder and the conductive material may be from 0.5 wt% to 5 wt% based on 100 wt% of the positive electrode active material layer.

The first tab 1211 is electrically connected to a first current collector plate 131, which will be described below, and the terminal 140 (e.g., a rivet terminal) to serve as a current flow path between the first electrode plate 121 and the terminal 140.

In one or more embodiments, the second electrode plate 122 may be provided by applying a second active material 1223 such as graphite or carbon onto a second current collector 1222 formed of a metal foil such as copper or nickel, and may include the second tab 1221 (for example, a region not coated with the second active material 1223) extending and protruding in the upward direction of the second current collector 1222. The extending and protruding second tabs 1221 may be referred to as second non-coated tabs or second base material tabs, and the second tabs 1221 may be aligned at the same or similar location through a winding process of the electrode assembly 120, a base material punching process, or a base material notching process to form a multitap. In one or more embodiments, the second tab 1221 may include a lead tab that is separately provided and welded to the second current collector 1222. The second tab 1221 is electrically connected to a second current collector plate 132 to serve as a current flow path between the second electrode plate 122 and the case 110.

In one or more embodiments, the second active material includes a material capable of reversibly intercalating/deintercalating lithium ions, a lithium metal, an alloy of a lithium metal, a material capable of doping and dedoping lithium, or a transition metal oxide.

The material capable of reversibly intercalating/deintercalating lithium ions may include, for example, crystalline carbon, amorphous carbon, or a combination thereof. Examples of the crystalline carbon may be graphite such as natural graphite or artificial graphite, and examples of the amorphous carbon may include soft carbon or hard carbon, mesophase pitch carbide, calcined coke, and the like.

A Si-based negative electrode active material or a Sn-based negative electrode active material may be used as the material capable of doping and dedoping lithium. The Si-based anode active material may include silicon, a silicon-carbon composite, SiOx (0<x<2), a Si-based alloy, or a combination thereof.

The silicon-carbon composite may be a composite of silicon and amorphous carbon. According to one or more embodiments, the silicon-carbon composite may be in the form of silicon particles and amorphous carbon coated on the surface of the silicon particles.

The silicon-carbon composite may further include crystalline carbon. For example, the silicon-carbon composite may include a core including crystalline carbon and silicon particles and an amorphous carbon coating layer located on a surface of the core.

A negative electrode for a lithium secondary battery may include a current collector (e.g., a second current collector) and a negative electrode active material layer (e.g., a second active material layer) formed on the current collector. The negative electrode active material layer includes a negative electrode active material, and may further include a binder and/or a conductive material.

In one or more embodiments, the negative electrode active material layer may include 90 wt% to 99 wt% of the negative electrode active material, 0.5 wt% to 5 wt% of the binder, and 0 wt% to 5 wt% of the conductive material. A non-aqueous binder, an aqueous binder, a dry binder, or a combination thereof may be used as the binder. When the aqueous binder is used as the negative electrode binder, a cellulose-based compound capable of imparting viscosity can be further included.

The separator 123 may be interposed (located) between the first electrode plate 121 and the second electrode plate 122 to serve to prevent a short circuit between the first electrode plate 121 and the second electrode plate 122 and enable the movement of lithium ions therebetween. In one or more embodiments, the separator 123 is formed to be slightly wider than a width of each of the first electrode plate 121 and the second electrode plate 122, so that the separator 123 may protrude further upward, downward, leftward, and rightward than each of the first electrode plate 121 and the second electrode plate 122. Accordingly, the separator 123 can prevent the first electrode plate 121 and the second electrode plate 122 from directly coming into contact with the case 110 in upward and downward directions, and/or leftward and rightward directions of the electrode assembly 120. In one or more embodiments, the separator 123 may protrude and extend a predetermined length in the upward and downward directions of the electrode assembly 120, in which the first tab 1211 and the second tab 1221 are not present.

In one or more embodiments, the electrode assembly 120 may be hollow in a substantially central region, and this hollow central region may be referred to as a core 124. The core 124 may serve as a path through which pressure is discharged when an internal pressure of the secondary battery is greater than the reference pressure. In one or more embodiments, the internal pressure may be applied to the finishing plate 113 through the core 124, and the vent notch 1134 of the finishing plate 113 may be broken so that the internal pressure can be reduced.

In one or more embodiments, the electrode assembly 120 may be accommodated in the case 110 with an electrolyte. The electrolyte solution may include an organic solvent such as ethylene carbonate (EC), propylene carbonate (PC), diethyl carbonate (DEC), ethylmethyl carbonate (EMC) and/or dimethyl carbonate (DMC), and a lithium salt such as LiPF₆ and LiBF₄. In one or more embodiments, the electrolyte may be in a liquid, solid, or gel phase.

The current collector plate assembly 130 may include the first current collector plate 131 and the second current collector plate 132. The current collector plate assembly 130 may further include an insulating plate 133.

The first current collector plate 131 may electrically connect the first electrode plate 121 of the electrode assembly 120 and the rivet terminal 140. The first current collector plate 131 may include or be referred to as a current collector, a conductor, or a conductive lead. The first current collector plate 131 may be made of aluminum or an aluminum alloy. The first current collector plate 131 may be manufactured by punching a metal plate using a die and a punch, or by casting molten metal. In one or more embodiments, the first current collector plate 131 may include a first current collector plate first connection region 1311, a first current collector plate connecting region 1312 (e.g., a step), and a first current collector plate second connection region 1313. The first current collector plate first connection region 1311 may be electrically connected to the plurality of first tabs 1211 described above by a method such as laser welding. The first current collector plate connecting region 1312 may be bent and extend in the upward direction from the first current collector plate first connection region 1311. The first current collector plate second connection region 1313 may be bent and extend from the first current collector plate connecting region 1312 to be electrically connected to the rivet terminal 140 by a method such as laser welding. In this manner, the first current collector plate 131 may serve as a current flow path between the electrode assembly 120 and the rivet terminal 140.

The second current collector plate 132 may electrically connect the second electrode plate 122 of the electrode assembly 120 and the case 110 (e.g., the rivet plate 111). The second current collector plate 132 may include or be referred to as a current collector, a conductor, or a conductive lead. The second current collector plate 132 may be made of copper, a copper alloy, nickel, or a nickel alloy. The second current collector plate 132 may be manufactured by punching a metal plate using a die and a punch, or by casting molten metal. In one or more embodiments, the second current collector plate 132 may include a second current collector plate first connection region 1321, a second current collector plate connecting region 1322 (e.g., a step), and a second current collector plate second connection region 1323. The second current collector plate first connection region 1321 may be electrically connected to the plurality of second tabs 1221 described above by a method such as laser welding. The second current collector plate connecting region 1322 may be bent and extend in the upward direction from the second current collector plate first connection region 1321. The second current collector plate second connection region 1323 may be bent and extend from the second current collector plate connecting region 1322 to be electrically connected to the case 110 (e.g., the rivet plate 111) by a method such as laser welding. In this manner, the second current collector plate 132 may serve as a current flow path between the electrode assembly 120 and the case 110.

The insulating plate 133 may be interposed (located) between the first current collector plate 131 and the second current collector plate 132. In one or more embodiments s, the insulating plate 133 may be located on substantially the same horizontal plane as the first current collector plate 131 and the second current collector plate 132, or at least portions thereof. In one or more embodiments, a partial region (portion) of the insulating plate 133 may be interposed (located) between the second current collector plate second connection region 1323 and the electrode assembly 120. The insulating plate 133 may include or be referred to as an insulator, an insulating block, or an insulating spacer. In one or more embodiments, the insulating plate 133 may be made of polypropylene, polyethylene, ethylene-propylene-diene M-class rubber (EPDM), or nylon that does not react with an electrolyte. In one or more embodiments, the first current collector plate 131, the second current collector plate 132, and the insulating plate 133 may be manufactured by a double injection method.

The rivet terminal 140 may pass through and be coupled to the case 110. In one or more embodiments, the rivet terminal 140 may pass through and be coupled to the terminal hole 1111 provided in the rivet plate 111. In one or more embodiments an insulating gasket 1431 may be interposed (located) between the rivet terminal 140 and the terminal hole 1111. In one or more embodiments, the rivet terminal 140 may include a head portion 141 that is relatively wide, and a body portion 142 that is relatively narrow and extends in the downward direction from the head portion 141 to pass through the terminal hole 1111. In one or more embodiments, the rivet terminal 140 may further include a recess 1411 extending a predetermined depth from the head portion 141 toward the body portion 142. A thickness of the body portion 142 of the rivet terminal 140 is reduced by the recess 1411, which increases the transfer of energy from a laser beam utilized during manufacturing to the first current collector plate 131 (e.g., the first current collector plate second connection region 1313), thereby allowing the rivet terminal 140 and the first current collector plate 131 to be laser welded to each other. In one or more embodiments, an upper insulator 1432 may be interposed (e.g. located) between the head portion 141 and the rivet plate 111. In one or more embodiments, a lower insulator 1433 may be interposed (e.g. located) at a periphery of the body portion 142 passing through the rivet plate 111. In one or more embodiments, a lower insulator 1433 may be interposed (e.g. located) between the current collector plate assembly 130 and the rivet plate 111. In one or more embodiments, the recess 1411 may be finished with a substantially flat member (e.g., metal) after the welding process. In one or more embodiments, after the welding process, a metal member may be coupled to the recess 1411 or close an upper end of the recess 1411.

The insulating member 150 may surround (or substantially surround) a perimeter of each of the electrode assembly 120 and the current collector plate assembly 130. In one or more embodiments, the insulating member 150 may be in contact with the perimeter of each of the electrode assembly 120 and the current collector plate assembly 130. The insulating member 150 may surround (or substantially surround) a perimeter of each of the first current collector plate 131 and the second current collector plate 132. In one or more embodiments, the insulating member 150 may be in contact with the perimeter of each of the first current collector plate 131 and the second current collector plate 132. The insulating member 150 may include or be referred to as an insulating ring, an insulating tape, an insulating film, or an insulator. In one or more embodiments, the insulating member 150 may be substantially in the form of a circular ring. In one or more embodiments, the insulating member 150 may surround (or substantially surround) an upper perimeter of the electrode assembly 120 (or surround or substantially surround a portion of the electrode assembly 120 proximate to an upper perimeter). In one or more embodiments, the insulating member 150 may be in contact with the upper perimeter of the electrode assembly 120 (or in contact with a portion of the electrode assembly 120 proximate to an upper perimeter). In one or more embodiments, a partial region (portion) of the insulating member 150 surrounds a perimeter (an outer arc) of the first current collector plate first connection region 1311, so that the perimeter of the first current collector plate first connection region 1311 does not come into contact with the sidewall 112 of the case 110. In one or more embodiments a partial region (portion) of the insulating member 150 supports the second current collector plate second connection region 1323 from below such that the second current collector plate second connection region 1323 is brought into close contact with the rivet plate 111 during the laser welding process. As described above, a partial region (portion) of the insulating plate 133 is interposed (located) between the second current collector plate second connection region 1323 and the electrode assembly 120 such that the second current collector plate second connection region 1323 is brought into close contact with the rivet plate 111. In one or more embodiments, the insulating member 150 may be made of polypropylene, polyethylene, EPDM, or nylon that does not react with an electrolyte.

In this manner, the present disclosure may provide the secondary battery 100 with a low electrical resistance and a short current path by providing the first tab 1211 (e.g., a positive electrode tab) and the second tab 1221 (e.g., a negative electrode tab) of the electrode assembly 120 in the same direction (e.g., in the upward direction) to be electrically connected to the first terminal 140 (e.g., the rivet terminal) and the second terminal (e.g., the case 110). In addition, the present disclosure may provide the secondary battery 100 allowing a relatively large electrode assembly 120 to be accommodated inside the case 110 by having the first current collector plate 131 (e.g., a positive electrode current collector plate) and the second current collector plate 132 (e.g., a negative electrode current collector plate) that are three-dimensionally coupled and provided in the same region to occupy a small volume in an inner space of the case 110.

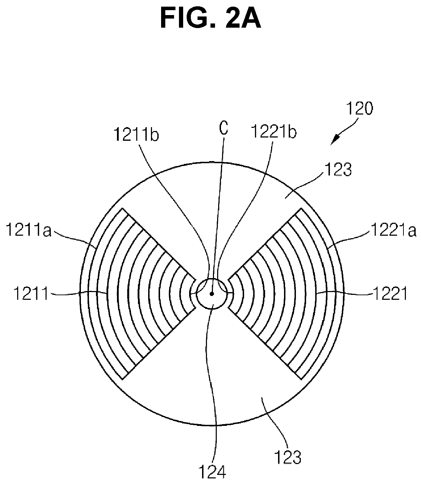

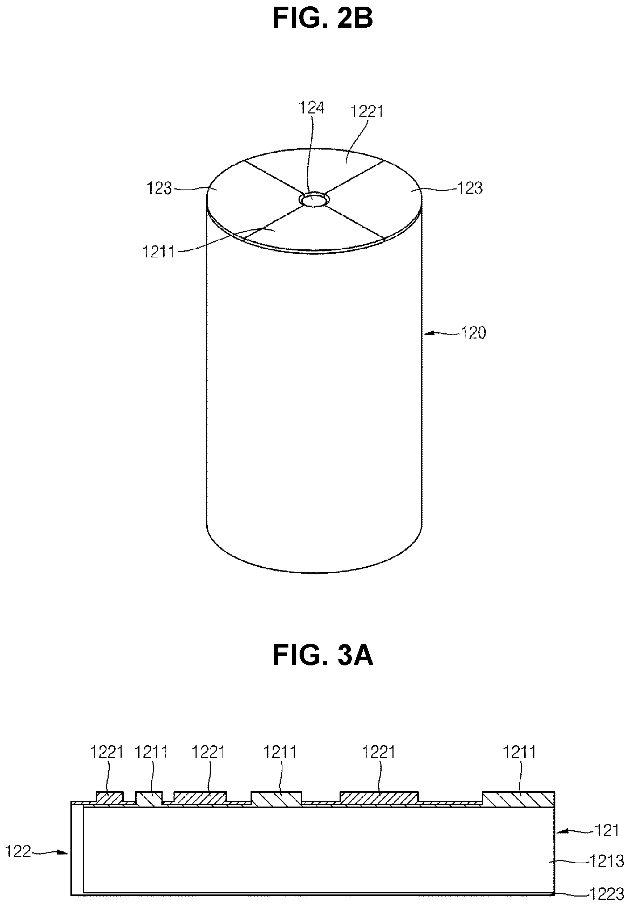

FIGS. 2A and 2B are a plan view and a perspective view illustrating an electrode assembly 120 of the secondary battery 100 according to one or more embodiments of the present disclosure. As shown in FIGS. 2A and 2B, the electrode assembly 120 according to one or more embodiments of the present disclosure may include a plurality of first tabs 1211 and a plurality of second tabs 1221, which protrude and extend in the upward direction. In one or more embodiments, the plurality of first tabs 1211 and the plurality of second tabs 1221 may be symmetric to each other around the core 124 (e.g., an empty space) at the center or central portion of the electrode assembly 120.

In one or more embodiments, the plurality of first tabs 1211 may have a planar circular sector shape or planar fan-shape with a center C, an outer arc 1211a, and an inner arc 1211b. A length of the outer arc 1211a may be greater than a length of the inner arc 1211b. In one or more embodiments, an interior angle of the plurality of first tabs 1211 may be in a range from about 10° to about 180°, about 40° to about 160°, or about 80° to about 120°. When the interior angle of the plurality of first tabs 1211 is greater than about 180°, the first tabs 1211 may be in contact with the second tabs 1221, and when the central angle of the plurality of first tabs 1211 is less than about 10°, a contact area or a welding area with the first current collector plate 131 may be relatively small (e.g., insufficiently small). In one or more embodiments, the plurality of first tabs 1211 may have an approximately rectangular planar shape. In one or more embodiments, the plurality of first tabs 1211 may have a rectangular planar shape with the center C, the outer arc 1211a, and the inner arc 1211b.

In one or more embodiments, the plurality of second tabs 1221 may be provided at a location spaced apart from the plurality of first tabs 1211, and may have a planar circular sector shape or planar fan-shape with a center C, an outer arc 1221a, and an inner arc 1221b. A length of the outer arc 1221a may be greater than a length of the inner arc 1221b. In one or more embodiments, an interior angle of the plurality of second tabs 1221 may be in a range from about 10° to about 180°, about 40° to about 160°, or about 80 to about 120°. When the interior angle of the plurality of second tabs 1221 is greater than about 180°, the second tabs 1221 may be in contact with the first tabs 1211, and when the central angle of the plurality of second tabs 1221 is less than about 10°, a contact area or a welding area with the second current collector plate 132 may be relatively small (e.g., insufficiently small). In one or more embodiments, the plurality of second tabs 1221 may have an approximately rectangular planar shape. In one or more embodiments, the plurality of second tabs 1221 may have a rectangular planar shape with the center C, the outer arc 1221a, and the inner arc 1221b.

In one or more embodiments, a portion of the separator 123 may protrude and extend into a region in which the plurality of first tabs 1211 and the plurality of second tabs 1221 do not protrude and extend. In one or more embodiments, upper sides of the plurality of first tabs 1211, upper sides of the plurality of second tabs 1221, and upper sides of the separator 123 may be substantially coplanar with each other.

FIGS. 3A to 3D are plan views illustrating an unfolded state of the electrode assembly 120 of the secondary battery according to one or more embodiments of the present disclosure. In FIGS. 3A to 3D, in each of first and second electrode plates 121 and 122, a left end is a winding start end (a portion at which winding starts) and a right end is a winding finish end (a portion at which winding is finished). For convenience of description, a separator is not illustrated.

In one or more embodiments, as shown in FIG. 3A, the first and second tabs 1211 and 1221 may be provided (e.g. formed) by a base material punching method. A width of each of the first and second tabs 1211 and 1221 may gradually increase from the winding start end toward the winding finish end.

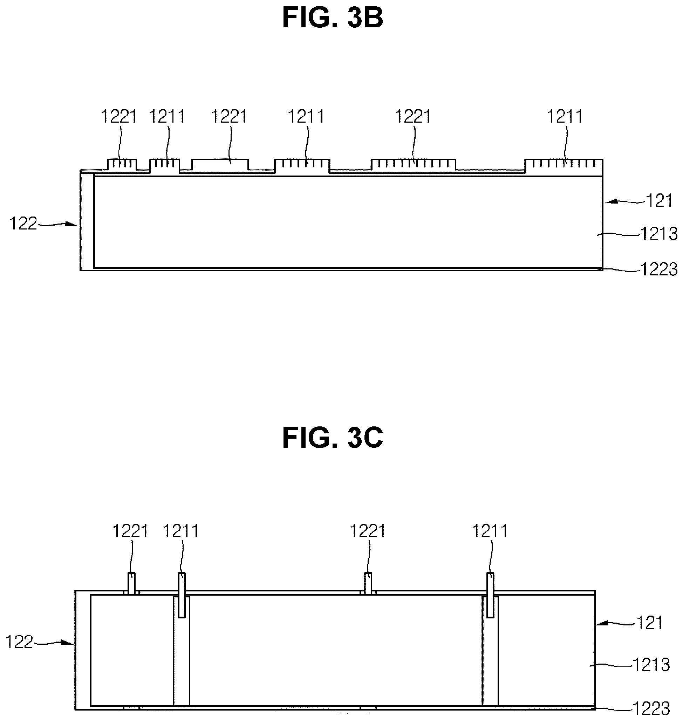

In one or more embodiments, as shown in FIG. 3B, the first and second tabs 1211 and 1221 may be notched after punching a base material. The width of each of the first and second tabs 1211 and 1221 may gradually increase from the winding start end toward the winding finish end.

In one or more embodiments, as shown in FIG. 3C, the first and second tabs 1211 and 1221 may be separately provided (formed) and connected to the first and second electrode plates 121 and 122, respectively. In one or more embodiments, each of first and second active materials 1213 and 1223 may be provided by a pattern coating method, and the first and second active materials 1213 and 1223 may not be provided in a region (e.g., a region corresponding to an entire vertical length) to which the first and second tabs 1211 and 1221 are attached.

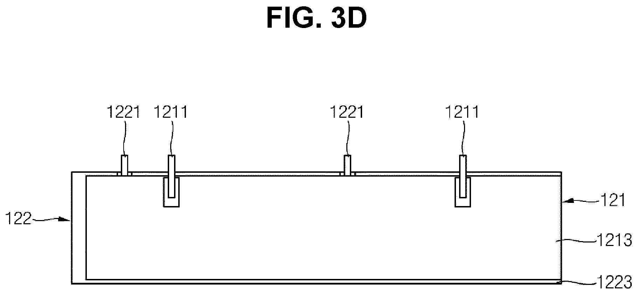

In first and second active materials 1213 and 1223, as shown in FIG. 3D, the first and second tabs 1211 and 1221 may be separately provided (e.g. formed) and connected to the first and second electrode plates 121 and 122, respectively. In one or more embodiments, each of the first and second active materials 1213 and 1223 may be provided (formed) by a pattern coating method, and the first and second active materials 1213 and 1223 may not be provided in a region (e.g., a region corresponding to a portion of the entire vertical length) to which the first and second tabs 1211 and 1221 are attached.

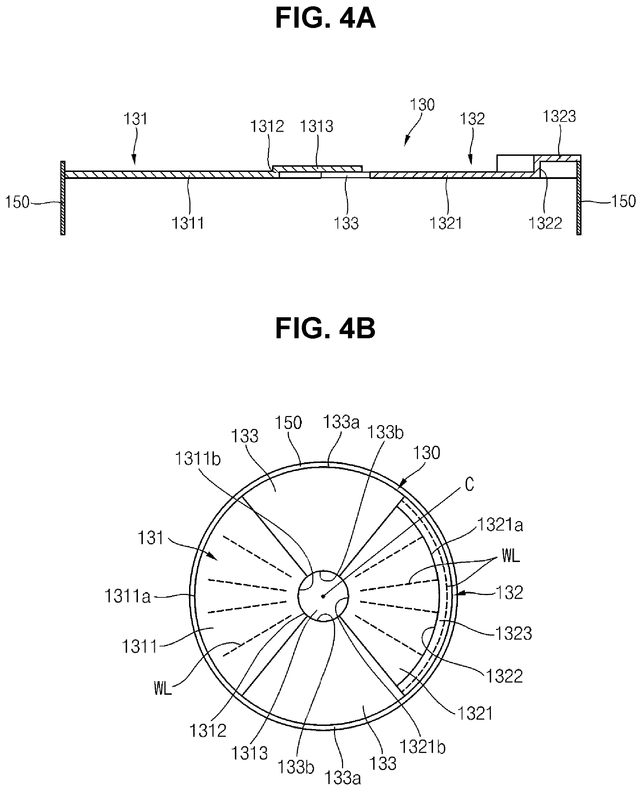

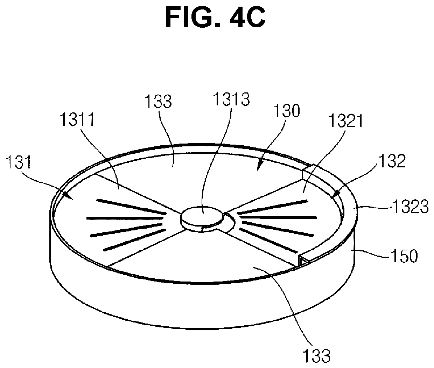

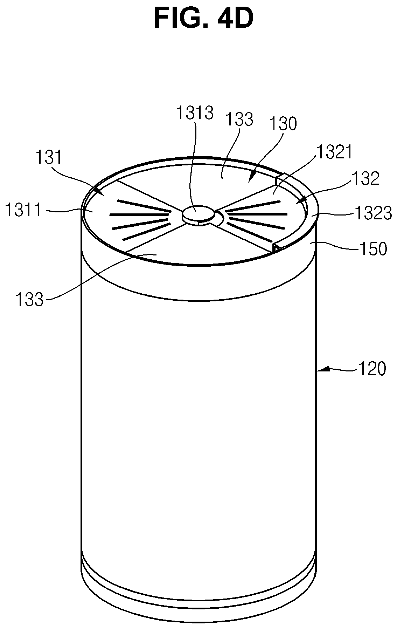

FIGS. 4A to 4C are a cross-sectional view, a plan view, and a perspective view, respectively, illustrating a current collector plate assembly 130 and an insulating member 150 of the secondary battery 100 according to one or more embodiments of the present disclosure. FIG. 4D is a perspective view illustrating a state in which the current collector plate assembly 130 and the insulating member 150 according to one or more embodiments of the present disclosure are coupled to the electrode assembly 120. As shown in FIGS. 4A to 4D, the current collector plate assembly 130 may include a first current collector plate 131, a second current collector plate 132, and an insulating plate 133 (optional), and the insulating member 150 may be simultaneously in contact with the electrode assembly 120 and the current collector plate assembly 130. In one or more embodiments, the insulating member 150 may surround at least some of the electrode assembly 120 and at least some of the current collector plate assembly 130.

The first current collector plate 131 may include a first current collector plate first connection region 1311, a first current collector plate connecting region 1312 (e.g., a step) extending upward from the first current collector plate first connection region 1311, and a first current collector plate second connection region 1313 extending from the first current collector plate connecting region 1312. In one or more embodiments the first current collector plate first connection region 1311 may have a planar circular sector shape or a planar fan-shape with a center C, an outer arc 1311a, and an inner arc 1311b. A length of the outer arc 1311a may be greater than a length of the inner arc 1311b. In one or more embodiments, the first current collector plate second connection region 1313 may have a disc shape with a center. In one or more embodiments, in the first current collector plate first connection region 1311, a plurality of welding lines WL may be provided in a straight line shape (e.g., radial weld lines WL), and the first tabs 1211 and the first current collector plate first connection region 1311 may be electrically connected to each other by the welding lines WL. In one or more embodiments the first tab 1211 may be pressed or bent in an inward or outward direction and welded to the first current collector plate first connection region 1311. In one or more embodiments, in the first current collector plate second connection region 1313, a plurality of welding lines WL may be provided in a ring shape (e.g., annular weld lines WL), and the rivet terminal 140 and the first current collector plate second connection region 1313 may be electrically connected to each other by the welding lines WL. In one or more embodiments, the planar shape of the first current collector plate first connection region 1311 may be the same as or similar to the planar shape of the first tab 1211. In one or more embodiments, the first current collector plate first connection region 1311 may have a shape overlapping the first tab 1211.

The second current collector plate 132 may include a second current collector plate first connection region 1321, a second current collector plate connecting region 1322 (e.g., a step) extending upward from the second current collector plate first connection region 1321, and a second current collector plate second connection region 1323 extending from the second current collector plate connecting region 1322. In one or more embodiments, the second current collector plate first connection region 1321 may have a planar circular sector shape or a planar fan-shape with a center C, an outer arc 1321a, and an inner arc 1321b. In first current collector plate connecting region 1312, the second current collector plate first connection region 1321 may be symmetric with the first current collector plate first connection region 1311 about the core 124 of the electrode assembly 120 or about the first current collector plate second connection region 1313. In one or more embodiments, the second current collector plate second connection region 1323 may have a semi-annular (semi-circular) ring plate shape that has a center. In one or more embodiments, a center C of the second current collector plate second connection region 1323 may coincide with the core 124 of the electrode assembly 120 or a center C of the first current collector plate second connection region 1313.

In one or more embodiments, in the second current collector plate first connection region 1321, a plurality of welding lines WL may be provided in a straight line shape (e.g., radial weld lines WL), and the second tabs 1221 and the second current collector plate first connection region 1321 may be electrically connected to each other by the welding lines WL. In one or more embodiments, the second tab 1221 may be pressed or bent in an inward or outward direction and welded to the second current collector plate first connection region 1321. In one or more embodiments, in the second current collector plate second connection region 1323, a plurality of welding lines WL may be provided in a dotted line shape, and a part of the case 110 (e.g., the rivet plate 111) and the second current collector plate second connection region 1323 may be electrically connected to each other by the welding lines WL. In one or more embodiments, the planar shape of the second current collector plate first connection region 1321 may be the same as or similar to the planar shape of the second tab 1221. In one or more embodiments, the second current collector plate first connection region 1321 may have a shape overlapping the second tab 1221.

In one or more embodiments, the first current collector plate first connection region 1311 and the second current collector plate first connection region 1321 may be located on the same or similar planes (e.g., co-planar or substantially co-planar), and the first current collector plate second connection region 1313 may be located closer to the electrode assembly 120 than the second current collector plate second connection region 1323 is (e.g., the second current collector plate second connection region 1323 may be higher than the first current collector plate second connection region 1313). Accordingly, the current collector plate assembly 130 is provided with a compact thickness, and thus occupies a relatively small volume inside the secondary battery 100. Accordingly, a relatively large electrode assembly 120 may be provided inside the secondary battery 100.

As described above, the insulating plate 133 may be provided (e.g. located) between the first current collector plate 131 and the second current collector plate 132. In one or more embodiments, a partial region (e.g. a portion) of the insulating plate 133 may also be provided (e.g. located) between the second current collector plate second connection region 1323 and the electrode assembly 120. In one or more embodiments, the insulating plate 133 may have a planar circular sector shape or a planar fan-shape with a center, an outer arc 133a, and an inner arc 133b. As described above, the first current collector plate 131, the second current collector plate 132, and the insulating plate 133 may be manufactured through a double injection method so that an integrated current collector plate assembly 130 may be formed.

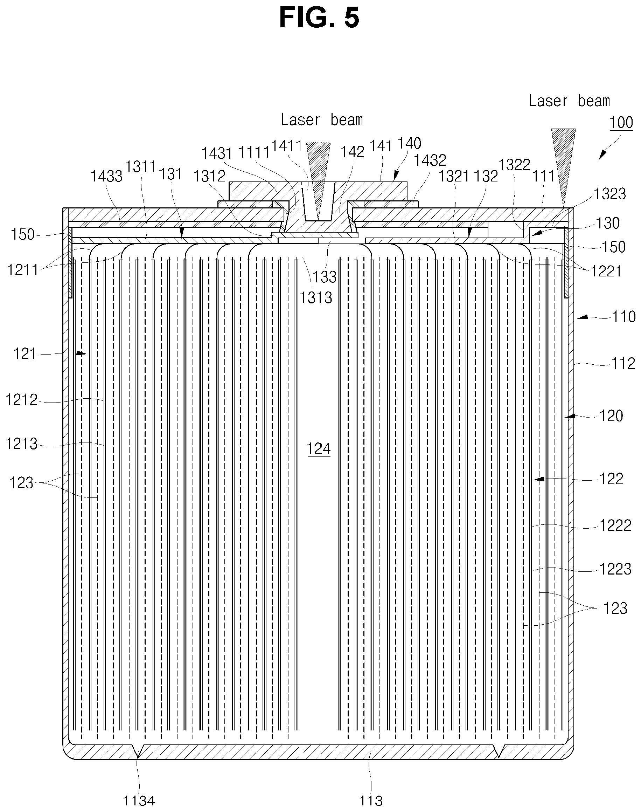

FIG. 5 is a schematic view illustrating a laser welding method in a method of manufacturing the secondary battery 100 according to one or more embodiments of the present disclosure. As shown in FIG. 5, a laser beam is applied to the recess 1411 of the rivet terminal 140 such that the body portion 142 of the rivet terminal 140 may be electrically connected to the first current collector plate second connection region 1313. In addition, as shown in FIG. 5, a laser beam is applied along a perimeter of the case 110 (e.g., the rivet plate 111) so that the rivet plate 111 may be electrically connected to the second current collector plate second connection region 1323.

In this manner, a first current path is provided through the first terminal (e.g. the rivet terminal 140), the first current collector plate 131, and the first electrode plate 121, and a second current path is provided through the case 110 or the rivet plate 111 (i.e., the second terminal), the second current collector plate 132, and the second electrode plate 122. Accordingly, an internal electrical resistance of the secondary battery 100 may be reduced by providing the first and second current paths that are relatively short.

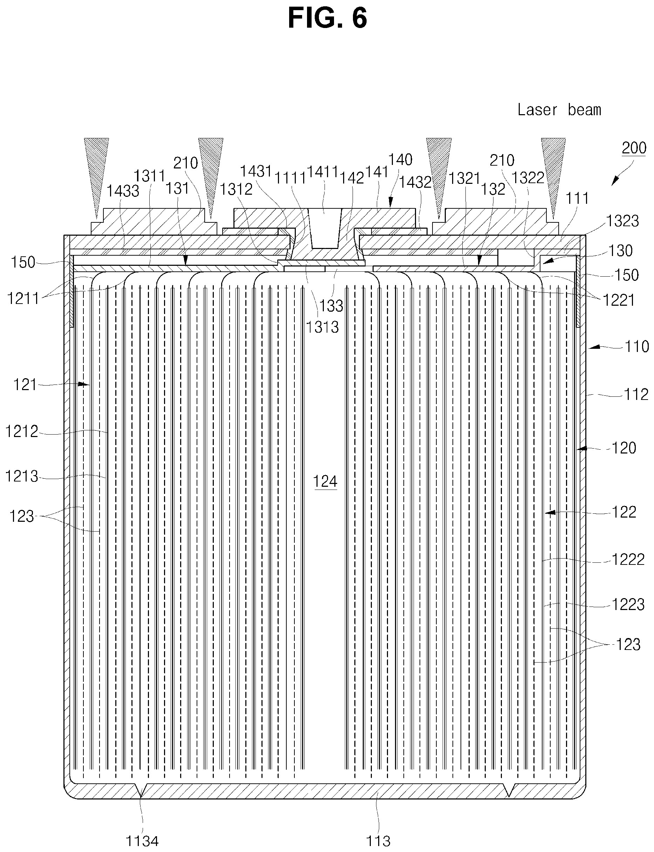

FIG. 6 is a cross-sectional view illustrating a secondary battery 200 according to one or more embodiments of the present disclosure. The secondary battery 200 illustrated in FIG. 6 may be similar to the secondary battery 100 illustrated in FIGS. 1A and 1B, except that a conductive ring plate 210 is further provided. As shown in FIG. 6, the conductive ring plate 210 may be mechanically/electrically attached to a partial region (portion) of a case 110, which is a periphery of a rivet terminal 140 (e.g. on a rivet plate 111). In one or more embodiments, the conductive ring plate 210 may be welded to the rivet plate 111 by a laser beam. The conductive ring plate 210 may be provided with a material similar to or the same as that of the rivet plate 111. In one or more embodiments, an upper surface of the conductive ring plate 210 may form a plane similar to or the same as an upper surface of the rivet terminal 140 (e.g., the upper surface of the conductive ring plate 210 may be co-planar or substantially co-planar with an upper surface of the rivet terminal 140). Accordingly, busbars (not shown) connected to the rivet terminal 140 and the conductive ring plate 210 may have the same height or substantially the same height. In one or more embodiments, the upper surface of the conductive ring plate 210 may be lower than the upper surface of the rivet terminal 140. Accordingly, the busbars (not shown) connected to the rivet terminal 140 and the conductive ring plate 210 may have different heights.

In this manner, the present disclosure may provide the secondary battery 200 having flatness between the first terminal 140 (e.g., the rivet terminal) and the second terminal 110 by providing the conductive ring plate 210 on the second terminal 110 (e.g., the rivet plate 111 of the case 110).

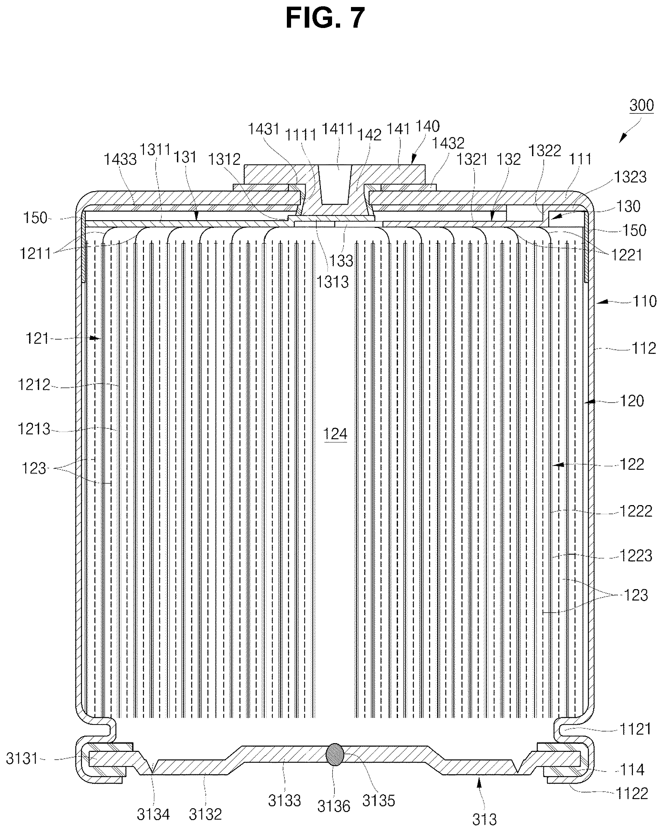

FIG. 7 is a cross-sectional view illustrating a secondary battery 300 according to one or more embodiments of the present disclosure. The secondary battery 300 illustrated in FIG. 7 may be similar to the secondary battery 100 illustrated in FIGS. 1A and 1B, except that a finishing plate 313 is coupled through a beading portion 1121 and a crimping portion 1122 provided to a sidewall portion 112 of a case 110. As shown in FIG. 7, the beading portion 1121 that is recessed inward and the crimping portion 1122 that is bent inward may be optionally provided at a lower end of the sidewall 112 of the case 110. In one or more embodiments, the finishing plate 313 may be coupled between the beading portion 1121 and the crimping portion 1122. In one or more embodiments, an insulating gasket 114 may be located in the beading portion 1121 and the crimping portion 1122, such that the finishing plate 313 may be coupled while the insulating gasket 114 is interposed (e.g. located) between the beading portion 1121 and the crimping portion 1122. In one or more embodiments, instead of providing the beading portion 1121 and the crimping portion 1122, the finishing plate 313 may be directly welded to the sidewall 112, or the finishing plate 113 may be coupled to the sidewall 112 by a curling method or a seaming method.

In one or more embodiments, the finishing plate 313 may include a vent notch 3134 in an upper surface thereof such that the finishing plate 313 is relatively thin at the vent notch 3134. In one or more embodiments, the finishing plate 313 may include a peripheral region 3131 fitted between the beading portion 1121 and the crimping portion 1122, an inner region 3132 that is connected to the peripheral region 3131 and lower than the peripheral region 3131, and a central region 3133 that is connected to the inner region 3132 and higher than the inner region 3132. The vent notch 3134 may be provided in the inner region 3132. In one or more embodiments, the central region 3133 may be closer to the electrode assembly 120 than the peripheral region 3131 and the inner region 3132 are. The vent notch 3134 may include or be referred to as a safety vent.

In one or more embodiments, the finishing plate 313 may further include an injection hole 3135 and a plug 3136 in the injection hole 3135. The injection hole 3135 may be provided in the finishing plate 313, for example, the central region 3133, and the injection hole 3135 may be closed by the plug 3136. Accordingly, an electrolyte may be injected through the injection hole 3135, and the injection hole 3135 may be closed by the plug 3136, thereby preventing leakage of the electrolyte. In one or more embodiments, such an injection hole and plug may be provided in a rivet plate 111, which may be applicable to all of the embodiments described above.

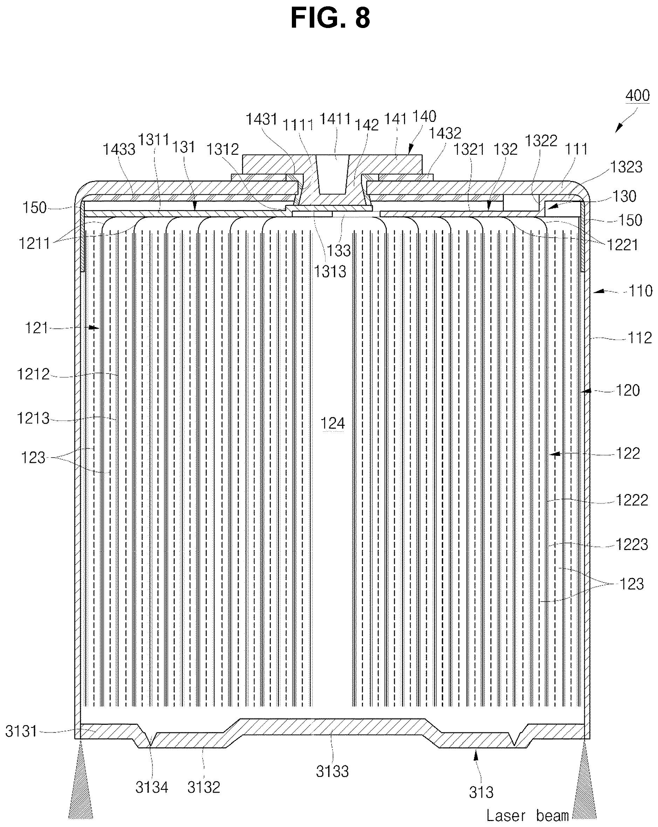

FIG. 8 is a cross-sectional view illustrating a secondary battery 400 according to one or more embodiments of the present disclosure. The secondary battery 400 illustrated in FIG. 8 may be similar to the secondary battery 300 illustrated in FIG. 7, except that a finishing plate 313 is welded and fixed to a sidewall 112 of a case 110. As shown in FIG. 8, the finishing plate 313 may be fixed to the sidewall 112 of the case 110 by laser welding. In one or more embodiments, after the finishing plate 313 is coupled to the sidewall 112 of the case 110, a laser beam may be irradiated to a location at which a perimeter of the finishing plate 313 is in contact with the sidewall 112. Accordingly, the perimeter of the finishing plate 313 and a partial region of the sidewall 112 are melted and cooled, so that the finishing plate 313 may be coupled to the sidewall 112 of the case 110. As described above, according to the present disclosure, by providing a beadless secondary battery 400, a space occupied by beading and crimping portions can be eliminated. Accordingly, the present disclosure may provide a relatively high-capacity secondary battery 400 by allowing a relatively larger electrode assembly 120 to be accommodated in the case 110.

The present disclosure can provide a secondary battery having a low electrical resistance and a short current path by providing a first tab (e.g., a positive electrode tab) and a second tab (e.g., a negative electrode tab) of an electrode assembly in the same direction to be electrically connected to a first terminal (e.g., a rivet terminal) and a second terminal (e.g., a case), respectively.

The present disclosure can provide a secondary battery allowing a relatively large electrode assembly to be accommodated inside a case by having a first current collector plate (e.g., a positive electrode current collector plate) and a second current collector plate (e.g., a negative electrode current collector plate) that are three-dimensionally coupled and provided in the same region to occupy a small volume in an inner space of the case.

The present disclosure can provide a secondary battery having flatness between a first terminal (e.g., a rivet terminal) and a second terminal (e.g., a case) by providing a conductive ring plate on the second terminal.

## Claims

1. A secondary battery (100) comprising:
a case (110) having a cylindrical shape;
an electrode assembly (120) accommodated in the case (110) and including a plurality of first tabs (1211) protruding in a first direction and a plurality of second tabs (1221) protruding in the first direction;
a first current collector plate (131) accommodated in the case (110) and connected to the plurality of first tabs (1211);
a second current collector plate (132) configured to connect the plurality of second tabs (1221) to the case (110);
a rivet terminal (140) connected to the first current collector plate (131) and passing through the case (110); and
an insulating member (150) in contact with a perimeter of each of the electrode assembly (120), the first current collector plate (131), and the second current collector plate (132).

2. The secondary battery (100) of claim 1, wherein each of the plurality of first tabs (1211) has a planar circular sector shape with a center, an outer arc, and an inner arc or a rectangular planar shape.

3. The secondary battery (100) of claim 2, wherein an interior angle of each of the plurality of first tabs (1211) is less than 180°.

4. The secondary battery (100) of claim 1, 2 or 3, wherein the plurality of second tabs (1221) is spaced apart from and facing the plurality of first tabs (1211), and wherein each of the plurality of second tabs (1221) has a planar circular sector shape with a center, an outer arc, and an inner arc or a rectangular planar shape.

5. The secondary battery (100) of claim 4, wherein an interior angle of each of the plurality of second tabs (1221) is less than 180°.

6. The secondary battery (100) of any preceding claim, wherein the first current collector plate (131) comprises:
a first current collector plate first connection region (1311) connected to the plurality of first tabs (1211);
a first current collector plate connecting region (1312) extending in the first direction from the first current collector plate first connection region (1311); and
a first current collector plate second connection region (1313) bent and extending from the first current collector plate connecting region (1312) to be connected to the rivet terminal (140).

7. The secondary battery (100) of claim 6, wherein
the first current collector plate first connection region (1311) has a planar circular sector shape with a center, an outer arc, and an inner arc, and
the first current collector plate second connection region (1313) has a disc shape with a center.

8. The secondary battery (100) of any preceding claim, wherein the second current collector plate (132) includes:
a second current collector plate first connection region (1321) connected to the plurality of second tabs (1221);
a second current collector plate connecting region (1322) extending in the first direction from the second current collector plate first connection region (1321); and
a second current collector plate second connection region (1323) extending from the second current collector plate connecting region (1322) and configured to be connected to the case (110).

9. The secondary battery (100) of claim 8, wherein:
the second current collector plate first connection region (1321) has a planar circular sector shape with a center, an outer arc, and an inner arc, and
the second current collector plate second connection region (1323) has a semi-circular ring plate shape with a center.

10. The secondary battery (100) of claim 9, wherein a portion of the insulating member (150) supports the second current collector plate second connection region (1323).

11. The secondary battery (100) of any preceding claim, further comprising one or more insulating plates between the first current collector plate (131) and the second current collector plate (132),
wherein the one or more insulating plates have a planar circular sector shape with a center, an outer arc, and an inner arc.

12. The secondary battery (100) of any preceding claim, further comprising a conductive ring plate (210) attached to a portion of the case (110) extending around a periphery of the rivet terminal (140).

13. The secondary battery (100) of claim 8, when dependent on claim 6, wherein:
the first current collector plate first connection region (1311) and the second current collector plate first connection region (1321) are located on the same plane; and
the first current collector plate second connection region (1313) is located closer to the electrode assembly (120) than the second current collector plate second connection region (1323).

14. The secondary battery (100) of any preceding claim, wherein the case (110) comprises a rivet plate (111) to which the rivet terminal (140) is coupled, a sidewall (112) welded to the rivet plate (111) and extending in a second direction opposite to the first direction, and a finishing plate (113) integrally extending from the sidewall (112),
and wherein optionally the finishing plate (113) comprises a safety vent (1134).

15. The secondary battery (100) of any one of claims 1 to 13, wherein the case (110) comprises a rivet plate (111) to which the rivet terminal (140) is coupled, a sidewall (112) integrally extending in a second direction opposite to the first direction from the rivet plate (111), and a finishing plate (113) configured to close an end of the sidewall (112), and wherein optionally at least one of:
the finishing plate (113) comprises a safety vent (1134);
the finishing plate (113) is fixed to the sidewall (112) by a beading portion (1121) and a crimping portion (1122) on the sidewall (112);
the finishing plate (113) is fixed to the sidewall (112) by a weld.

## Patentansprüche

1. Sekundärbatterie (100), umfassend:
ein Gehäuse (110), das eine zylindrische Form aufweist;
eine in dem Gehäuse (110) untergebrachte Elektrodenanordnung (120) und einschließlich einer Vielzahl von ersten Laschen (1211), die in eine erste Richtung herausragen, und einer Vielzahl von zweiten Laschen (1221), die in die erste Richtung herausragen;
eine erste Stromabnehmerplatte (131), die in dem Gehäuse (110) untergebracht und mit der Vielzahl von ersten Laschen (1211) verbunden ist;
eine zweite Stromabnehmerplatte (132), die so konfiguriert ist, dass sie die Vielzahl von zweiten Laschen (1221) mit dem Gehäuse (110) verbindet;
ein Nietanschluss (140), der mit der ersten Stromabnehmerplatte (131) verbunden ist und durch das Gehäuse (110) verläuft; und
ein isolierendes Element (150), das mit einem Umfang jeder von der Elektrodenanordnung (120), der ersten Stromabnehmerplatte (131) und der zweiten Stromabnehmerplatte (132) in Kontakt steht.

2. Sekundärbatterie (100) nach Anspruch 1, wobei jede der Vielzahl von ersten Laschen (1211) eine ebene Kreissektorform mit einem Mittelpunkt, einem äußeren Bogen und einem inneren Bogen oder eine rechteckige ebene Form aufweist.

3. Sekundärbatterie (100) nach Anspruch 2, wobei ein Innenwinkel jeder der Vielzahl von ersten Laschen (1211) weniger als 180° beträgt.

4. Sekundärbatterie (100) nach Anspruch 1, 2 oder 3, wobei die Vielzahl von zweiten Laschen (1221) von der Vielzahl von ersten Laschen (1211) beabstandet und diesen zugewandt ist und wobei jede der Vielzahl von zweiten Laschen (1221) eine ebene Kreissektorform mit einem Mittelpunkt, einem äußeren Bogen und einem inneren Bogen oder eine rechteckige ebene Form aufweist.

5. Sekundärbatterie (100) nach Anspruch 4, wobei ein Innenwinkel jeder der Vielzahl von zweiten Laschen (1221) weniger als 180° beträgt.

6. Sekundärbatterie (100) nach einem vorstehenden Anspruch, wobei die erste Stromabnehmerplatte (131) Folgendes umfasst:
einen ersten Verbindungsbereich für die erste Stromabnehmerplatte (1311), der mit der Vielzahl von ersten Laschen (1211) verbunden ist;
einen Verbindungsbereich für die erste Stromabnehmerplatte (1312), der sich in die erste Richtung vom ersten Verbindungsbereich für die erste Stromabnehmerplatte (1311) erstreckt; und
einen zweiten Verbindungsbereich für die erste Stromabnehmerplatte (1313), der abgewinkelt ist und sich vom ersten Verbindungsbereich für die erste Stromabnehmerplatte (1312) erstreckt, um mit dem Nietanschluss (140) verbunden zu werden.

7. Sekundärbatterie (100) nach Anspruch 6, wobei
der erste Verbindungsbereich für die erste Stromabnehmerplatte (1311) die Form eines ebenen Kreissektors mit einem Mittelpunkt, einem äußeren Bogen und einem inneren Bogen aufweist, und
der zweite Verbindungsbereich für die erste Stromabnehmerplatte (1313) eine Scheibenform mit einem Mittelpunkt aufweist.

8. Sekundärbatterie (100) nach einem vorstehenden Anspruch, wobei die zweite Stromabnehmerplatte (132) Folgendes einschließt:
einen ersten Verbindungsbereich für die zweite Stromabnehmerplatte (1321), der mit der Vielzahl von zweiten Laschen (1221) verbunden ist;
einen Verbindungsbereich für die zweite Stromabnehmerplatte (1322), der sich in die erste Richtung von dem ersten Verbindungsbereich der zweiten Stromabnehmerplatte (1321) erstreckt; und
einen zweiten Verbindungsbereich für die zweite Stromabnehmerplatte (1323), der sich von dem Verbindungsbereich der zweiten Stromabnehmerplatte (1322) erstreckt und so konfiguriert ist, dass er mit dem Gehäuse (110) verbunden wird.

9. Sekundärbatterie (100) nach Anspruch 8, wobei:
der erste Verbindungsbereich für die zweite Stromabnehmerplatte (1321) eine ebene Kreissektorform mit einem Mittelpunkt, einem äußeren Bogen und einem inneren Bogen aufweist, und
der zweite Verbindungsbereich für die zweite Stromabnehmerplatte (1323) die Form einer halbkreisförmigen Ringplatte mit einem Mittelpunkt aufweist.

10. Sekundärbatterie (100) nach Anspruch 9, wobei ein Abschnitt des isolierenden Elements (150) den zweiten Verbindungsbereich für die zweite Stromabnehmerplatte (1323) stützt.

11. Sekundärbatterie (100) nach einem vorstehenden Anspruch, weiter umfassend eine oder mehrere Isolierplatten zwischen der ersten Stromabnehmerplatte (131) und der zweiten Stromabnehmerplatte (132),
wobei die eine oder die mehreren Isolierplatten eine ebene Kreissektorform mit einem Mittelpunkt, einem äußeren Bogen und einem inneren Bogen aufweisen.

12. Sekundärbatterie (100) nach einem vorstehenden Anspruch, weiter umfassend eine leitfähige Ringplatte (210), die an einem Abschnitt des Gehäuses (110) befestigt ist, der sich um den Umfang des Nietanschlusses (140) erstreckt.

13. Sekundärbatterie (100) nach Anspruch 8, wenn sie von Anspruch 6 abhängig ist, wobei:
der erste Verbindungsbereich für die erste Stromabnehmerplatte (1311) und der erste Verbindungsbereich für die zweite Stromabnehmerplatte (1321) sich in derselben Ebene befinden; und
der zweite Verbindungsbereich für die erste Stromabnehmerplatte (1313) sich näher an der Elektrodenanordnung (120) als der zweite Verbindungsbereich der zweiten Stromabnehmerplatte (1323) befindet.

14. Sekundärbatterie (100) nach einem vorstehenden Anspruch, wobei das Gehäuse (110) eine Nietplatte (111), an der der Nietanschluss (140) gekoppelt ist, eine Seitenwand (112), die an die Nietplatte (111) geschweißt wird und sich in einer zweiten, der ersten Richtung entgegengesetzten Richtung erstreckt, und eine Abschlussplatte (113), die sich einstückig von der Seitenwand (112) erstreckt, umfasst,
und wobei die Abschlussplatte (113) optional ein Sicherheitsventil (1134) umfasst.

15. Sekundärbatterie (100) nach einem der Ansprüche 1 bis 13, wobei das Gehäuse (110) eine Nietplatte (111), an der der Nietanschluss (140) gekoppelt ist, eine Seitenwand (112), die sich in einer zweiten, der ersten Richtung entgegengesetzten Richtung von der Nietplatte (111) aus einstückig erstreckt, und eine Abschlussplatte (113) umfasst, die zum Verschließen eines Endes der Seitenwand (112) konfiguriert ist, und wobei optional mindestens eines von Folgendem vorgesehen ist:
die Abschlussplatte (113) umfasst ein Sicherheitsventil (1134);
die Abschlussplatte (113) ist mit einem Wulstabschnitt (1121) und einem Bördelungsabschnitt (1122) an der Seitenwand (112) befestigt;
die Abschlussplatte (113) ist durch eine Schweißnaht an der Seitenwand (112) befestigt.

## Revendications

1. Batterie rechargeable (100) comprenant :
un boîtier (110) présentant une forme cylindrique ;
un ensemble d'électrodes (120) logé dans le boîtier (110) et incluant une pluralité de premières languettes (1211) faisant saillie dans une première direction et une pluralité de secondes languettes (1221) faisant saillie dans la première direction ;
une première plaque collectrice de courant (131) logée dans le boîtier (110) et reliée à la pluralité de premières languettes (1211) ;
une seconde plaque collectrice de courant (132) configurée pour connecter la pluralité de secondes languettes (1221) au boîtier (110) ;
une borne à rivets (140) reliée à la première plaque collectrice de courant (131) et traversant le boîtier (110) ; et
un élément isolant (150) en contact avec le périmètre de chacun des ensembles d'électrodes (120), de la première plaque collectrice de courant (131) et de la seconde plaque collectrice de courant (132).

2. Batterie secondaire (100) selon la revendication 1, dans laquelle chacune de la pluralité de premières languettes (1211) présente une forme de secteur circulaire plan avec un centre, un arc extérieur et un arc intérieur ou une forme plane rectangulaire.

3. Batterie secondaire (100) selon la revendication 2, dans laquelle un angle intérieur de chacune de la pluralité de premières languettes (1211) est inférieur à 180°.

4. Batterie secondaire (100) selon la revendication 1, 2 ou 3, dans laquelle la pluralité de secondes languettes (1221) est espacée et orientée vers la pluralité de premières languettes (1211), et dans laquelle chacune des secondes languettes (1221) présente une forme de secteur circulaire plan avec un centre, un arc extérieur et un arc intérieur ou une forme plane rectangulaire.

5. Batterie secondaire (100) selon la revendication 4, dans laquelle un angle intérieur de chacune des multiples languettes secondaires (1221) est inférieur à 180°.

6. Batterie secondaire (100) selon une quelconque revendication précédente, dans laquelle la première plaque collectrice de courant (131) comprend :
une première région de connexion (1311) de la première plaque collectrice de courant connectée à la pluralité de premières languettes (1211) ;
une première région de connexion de la première plaque collectrice de courant (1312) s'étendant dans la première direction à partir de la première région de connexion de la première plaque collectrice de courant (1311) ; et
une seconde région de connexion de la première plaque collectrice de courant (1313) pliée et s'étendant de la première région de connexion de la première plaque collectrice de courant (1312) en vue d'une connexion à la borne à rivets (140).

7. Batterie secondaire (100) selon la revendication 6, dans laquelle
la première région de connexion de la première plaque collectrice de courant (1311) présente une forme de secteur circulaire plan avec un centre, un arc extérieur et un arc intérieur, et
la seconde région de connexion de la première plaque collectrice de courant (1313) présente une forme de disque avec un centre.

8. Batterie secondaire (100) selon une quelconque revendication précédente, dans laquelle la seconde plaque collectrice de courant (132) inclut :
une première région de connexion de la seconde plaque collectrice de courant (1321) connectée à la pluralité de secondes languettes (1221) ;
une seconde région de connexion de la seconde plaque collectrice de courant (1322) s'étendant dans la première direction à partir de la première région de connexion de la seconde plaque collectrice de courant (1321) ; et
une seconde région de connexion de la seconde plaque collectrice de courant (1323) s'étendant à partir de la seconde région de connexion de la seconde plaque collectrice de courant (1322) et configurée pour être connectée au boîtier (110).

9. Batterie secondaire (100) selon la revendication 8, dans laquelle :
la seconde région de connexion de la première plaque collectrice de courant (1321) présente une forme de secteur circulaire plan avec un centre, un arc extérieur et un arc intérieur, et
la seconde région de connexion de la seconde plaque collectrice de courant (1323) présente une forme de plaque annulaire semi-circulaire avec un centre.

10. Batterie secondaire (100) selon la revendication 9, dans laquelle une partie de l'élément isolant (150) supporte la seconde région de connexion de la seconde plaque collectrice de courant (1323).

11. Batterie secondaire (100) selon une quelconque revendication précédente, comprenant en outre une ou plusieurs plaques isolantes entre la première plaque collectrice de courant (131) et la seconde plaque collectrice de courant (132),
dans laquelle ladite une ou les plusieurs plaques isolantes présentent une forme de secteur circulaire plan avec un centre, un arc extérieur et un arc intérieur.

12. Batterie secondaire (100) selon une quelconque revendication précédente, comprenant en outre une plaque annulaire conductrice (210) fixée à une partie du boîtier (110) s'étendant autour d'une périphérie de la borne à rivets (140).

13. Batterie secondaire (100) selon la revendication 8, dépendant de la revendication 6, dans laquelle :
la première région de connexion de la première plaque collectrice de courant (1311) et la première région de connexion de la seconde plaque collectrice de courant (1321) sont situées sur le même plan ; et
la seconde région de connexion de la première plaque collectrice de courant (1313) est située plus près de l'ensemble d'électrodes (120) que la seconde région de connexion de la seconde plaque collectrice de courant (1323).

14. Batterie secondaire (100) selon une quelconque revendications précédente, dans laquelle le boîtier (110) comprend une plaque à rivets (111) à laquelle est couplée la borne à rivets (140), une paroi latérale (112) soudée à la plaque à rivets (111) et s'étendant dans une seconde direction opposée à la première direction, et une plaque de finition (113) s'étendant intégralement à partir de la paroi latérale (112),
et dans laquelle la plaque de finition (113) comprend en option un évent de sécurité (1134).

15. Batterie secondaire (100) selon l'une quelconque des revendications 1 à 13, dans laquelle le boîtier (110) comprend une plaque à rivets (111) à laquelle est fixée la borne à rivets (140), une paroi latérale (112) s'étendant intégralement dans une seconde direction opposée à la première direction à partir de la plaque à rivets (111), et une plaque de finition (113) configurée pour fermer une extrémité de la paroi latérale (112), et dans laquelle, optionnellement, au moins un des éléments suivants peut être présent :
la plaque de finition (113) comprend un évent de sécurité (1134) ;
la plaque de finition (113) est fixée à la paroi latérale (112) par une partie de bourrelet (1121) et une partie de sertissage (1122) sur la paroi latérale (112) ;
la plaque de finition (113) est fixée à la paroi latérale (112) par une soudure.
